# EUROPÄISCHE PATENTSCHRIFT

(11) **EP 0 854 236 B1**
(45) Veröffentlichungstag und Bekanntmachung des Hinweises auf die Patenterteilung: **21.04.2004**
(21) Anmeldenummer: 97121428.3
(22) Anmeldetag: 05.12.1997
(51) Int. Cl.: E01C 23/22, F04B 49/20

(54) **Farbdosierpumpenantrieb für eine Strassenmarkierungsmaschine**
Metering pump drive for a road marking vehicle
Dispositif d'entraînement d'une pompe doseuse pour une machine de marquage routiers

(30) Priorität: 15.01.1997 DE 19701130
(43) Veröffentlichungstag der Anmeldung: 22.07.1998
(73) Patentinhaber: WALTER HOFMANN GmbH, MASCHINENFABRIK UND VERTRIEB, D-25462 Rellingen (DE)
(72) Erfinder: Hofmann, Frank, 22609 Hamburg (DE)
(74) Vertreter: Schulze Horn, Kathrin

(56) Entgegenhaltungen:
- EP-A- 0 169 768
- DE-A- 3 007 116
- DE-A- 3 814 703
- FR-A- 2 570 724

## Beschreibung

Die Erfindung betrifft einen Farbdosierpumpenantrieb für eine Straßenmarkierungsmaschine.

In der DE 30 07 116 A1 sind Farbdosierpumpen und deren Antriebe von bekannten Straßenmarkierungsmaschinen beispielhaft beschrieben. Bei allen dort beschriebenen bekannten Straßenmarkierungsmaschinen erfolgt der Antrieb der Farbdosierpumpe über mechanische Übertragungsmittel, wie Kettengetriebe, Zahnradgetriebe, stufenlos verstellbare Getriebe, Gelenkwellen usw. oder Kombinationen davon, entweder durch eines der Räder der Straßenmarkierungsmaschine oder aber durch ein zusätzliches Bodenrad.

Ein Nachteil dieser herkömmlichen Straßenmarkierungsmaschinen ist die Beschränkung auf verhältnismäßig kleine Kräfte für den Farbdosierpumpenantrieb, weshalb diese Straßenmarkierungsmaschinen bisher nur für das Niederdruckspritzverfahren, bei dem Farbdrücke bis 15 bar üblich sind, hergestellt werden konnten. Straßenmarkierungsmaschinen für Hochdruckspritzverfahren mit Drücken bis zu 200 bar, bei denen also Kräfte übertragen werden müssen, die das 10 bis 15-fache der beim Niederdruckspritzverfahren üblichen Kräfte betragen, konnten mit den bisherigen Mitteln nicht hergestellt werden, es sei denn, man würde einen unwirtschaftlich großen mechanischen Aufwand akzeptieren. Ein weiterer Nachteil ist die geringe konstruktive Freiheit bei der räumlichen Anordnung von Antrieb und Farbdosierpumpe an der Straßenmarkierungsmaschine. Die Anordnungsfreiheit, wie sie beispielsweise bei hydraulischen Komponenten üblich ist, ist nicht gegeben.

Ein weiterer Farbdosierpumpenantrieb für eine Straßenmarkierungsmaschine ist aus EP 0 169 768 A1 bekannt. In diesem Dokument ist eine Maschine zum Auftragen von Linien zur Kennzeichnung von Straßen und entsprechenden Flächen bekannt, wobei diese Maschine von einem Fahrzeug getragen wird und mindestens eine Düse aufweist, durch welche man unter einem bestimmten Druck aus einem Behälter angesaugte Farbe mit Hilfe einer Pumpe, die von einem Hydraulikmotor angetrieben wird, auf die Straße aufträgt. Wesentlich ist dabei weiter vorgesehen, daß Mittel zur präzisen Regelung der Förderleistung durch jede Düse, d.h. der pro Zeiteinheit durch jede Düse strömenden Farbmenge, aus Mitteln bestehen, die den Druck der Farbe oberhalb der Düse präzise regeln. Weiter ist gemäß diesem Dokument bevorzugt vorgesehen, daß die Mittel zur präzisen Regelung des Drucks der Farbe oberhalb jeder Düse aus Mitteln zur präzisen Regelung des Drucks der hydraulischen Flüssigkeit oberhalb des Antriebsmotors der Farbdosierpumpe bestehen. Weiter bevorzugt bestehen die Mittel zur Regelung des Drucks der hydraulischen Flüssigkeit aus einem Druckregler, der einstellbar ist. Mit dieser Maschine soll erreicht werden, daß lediglich ein Farbdruckkessel benötigt wird und daß ein Not-Halt sowie die Herstellung von unterbrochenen und trotzdem sauberen Markierungslinien ermöglicht wird. Weiter ist dem Dokument wörtlich zu entnehmen, daß die Dosierung der durch jede einzelne Düse auf den Boden (oder die Straße) abgesetzten Farbe von der Fahrgeschwindigkeit des Fahrzeugs (in der Zeichnung nicht dargestellt), daß diese Einrichtung trägt, und von dem Durchfluß der betrachteten Düse abhängt. Die exakte Regelung der Fahrgeschwindigkeit ist für den Fahrer des Fahrzeugs leicht, während die exakte Regelung des Durchflusses der Farbe durch die Düse aus der Installation kommt. Weiter ist dem Dokument zu entnehmen, daß ausgehend von der Fahrzeuggeschwindigkeit sowie den Wünschen bezüglich der Breite und Dicke des hergestellten Markierungsstreifens oder der Menge an Markierungsfarbe je Flächeneinheit Nomogramme oder Berechnungsmodule für jede Düse den notwendigen Durchfluß angeben, für den wiederum Nomogramme oder Berechnungsmodule die entsprechenden Drücke der Farbe und der Hydraulikflüssigkeit vor dem Farbpumpenantriebsmotor angeben. Weiter ist im genannten Dokument angegeben, daß man natürlich bei Änderung der Fahrgeschwindigkeit der Straßenmarkierungsmaschine und/oder bei Änderung der Linienabmessungen nach derselben Methode (d.h. anhand von Nomogrammen oder Berechnungsmodulen) den neuen Druck ermitteln muß, auf den der Hydraulikkreis vor dem Farbdosierpumpen-Antriebsmotor eingestellt werden muß. Im Zusammenhang damit ist in dem genannten Dokument angegeben, daß, wenn das Einstellen manuell erfolgt, um das Einstellen nur für Geschwindigkeitsänderungen zu vermeiden, man auf Proportionalhydraulik verweisen kann, welche dann die erforderliche Steuerung sicherstellt. Mittel zur Erfassung der Fahrgeschwindigkeit des die Straßenmarkierungsmaschine tragenden Fahrzeuges sind hier nicht erwähnt und sind auch für die in diesem Dokument beschriebene Art der Straßenmarkierungsmaschine nicht erforderlich. Die Konstanz der Schichtdicke der erzeugten Markierungslinien hängt bei dieser bekannten Markierungsmaschine von der Fähigkeit des Fahrers der Straßenmarkierungsmaschine ab, das Fahrzeug exakt auf einer vorgegebenen Geschwindigkeit zu halten.

Aus FR 25 70 724 A ist eine Straßenmarkierungsmaschine bekannt, bei der aus einem druckbeaufschlagten Farbvorratsbehälter die Farbe mittels einer Düse auf eine Straßenoberfläche ausgetragen wird. Eine Farbdosierpumpe mit einem Farbdosierpumpenantrieb gibt es hier nicht. Diese bekannte Straßenmarkierungsmaschine besitzt einen von einem Rad der Markierungsmaschine aus angetriebenen Impulsgeber, der eine zur Fahrgeschwindigkeit der Markierungsmaschine proportionale Anzahl von Impulsen an ein Regelgerät abgibt. Weiterhin ist zwischen dem druckbeaufschlagten Farbvorratsbehälter und der Düse ein Durchflußmesser angeordnet, der den aktuellen Farbdurchfluß in einer vom Farbvorratsbehälter zur Düse führenden Leitung erfaßt und ebenfalls entsprechende Signale an das Regelgerät gibt. Das Regelgerät verstellt aufgrund der empfangenen Signale vom Impulsgeber und vom Durchflußmesser ein Drosselorgan, welches im Verlauf der Farbleitung vom Farbvorratsbehälter zur Düse in Farbströmungsrichtung hinter den Durchflußmesser angeordnet ist. Die genannten Komponenten bilden hier also einen Regelkreis oder eine Regeleinrichtung, deren Ziel es ist, einen zur Fahrgeschwindigkeit der Markierungsmaschine proportionalen Farbausfluß aus der Düse zu erhalten. Nachteilig ist hier, daß der Farbvorratsbehälter unter Druck gesetzt werden muß, wofür besondere Sicherheitsmaßnahmen und-überprüfungen erforderlich sind. Dabei werden Aufwand und Kosten um so höher, je höher der Druck ist, mit dem die Farbe in der Düse ausgetragen werden soll. Aus wirtschaftlichen Gründen ist deshalb diese Vorrichtung auf niedrige Farbdrücke begrenzt.

Es ist die Aufgabe der Erfindung, einen Farbdosierpumpenantrieb für eine Straßenmarkierungsmaschine zu schaffen, der für Hochdruckspritzverfahren geeignet ist und größere Anordnungsfreiheit ermöglicht und bei dem die auf die Straße aufgebrachte Farbmenge pro Wegstreckeneinheit auch bei Veränderungen der Fahrgeschwindigkeit der Straßenmarkierungsmaschine zwangsweise konstant bleibt.

Die Lösung der Aufgabe erfolgt mit einem Farbdosierpumpenantrieb mit den Merkmalen des Anspruchs 1.

Die Erfindung besteht darin, daß ein mechanischer geschwindigkeitsproportionaler Antrieb mit geringen Kräften ein hydraulisches Steuergerät antreibt, das einem die Farbdosierpumpe antreibenden Hydraulikmotor eine dem Drehwinkel des Steuergerätes proportionale, von einer Versorgungspumpe bereitgestellte Druckölmenge zuteilt. Der sich an dem die Farbdosierpumpe antreibenden Hydraulikmotor einstellende Öldruck ist abhängig vom Antriebsdrehmoment der Farbdosierpumpe und in seinem Maximalwert nur begrenzt durch den erreichbaren Maximaldruck der Versorgungspumpe. Sowohl der Öldruck als auch die Drehgeschwindigkeit und damit der dem Hydraulikmotor zugeteilte Ölstrom haben keinen oder nur einen geringfügigen Einfluß auf das zum Antreiben des hydraulischen Steuergerätes erforderliche Drehmoment. Derartige für die Erfindung brauchbare hydraulische Steuergeräte liegen z.B. vor in den sog. Orbitrol®-Lenkeinheiten, Fabrikat Danfoss®. Diese Geräte bestehen aus einem Vertielerventil und einer Meßpumpe. Bei Drehung der Antriebswelle sorgt das Verteilerventil dafür, daß Öl von der Versorgungspumpe - abhängig von der Drehrichtung - über die Meßpumpe zu einem der beiden Ausgänge geleitet wird. Die mit der Antriebswelle gekoppelte Meßpumpe sorgt dafür, daß die Ölmenge zum Drehwinkel der Antriebswelle proportional ist. Hieraus ergibt sich, daß der Ölstrom (Ölmenge pro Zeiteinheit) proportional zur Drehgeschwindigkeit der Antriebswelle (Drehwinkel pro Zeiteinheit) ist. Die Meßpumpe liegt hier vor als ein in beiden Drehrichtungen als Verdrängerpumpe oder als Verdrängermotor arbeitender Konstantpumpenmotor.

Der der Drehgeschwindigkeit der Meßpumpe proportionale Ölstrom wird je nach Antriebsart und Bauart der Farbdosierpumpe entweder mindestens einem Rotationsölmotor oder mindestens einem Doppel-Linearölmotor zugeführt. Linearmotoren kommen in Form von doppelwirkenden Hydraulikzylindern an oszillierenden Verdrängerpumpen zum Einsatz.

Auf diese Weise läßt sich unter Aufbringung einer nur geringen Antriebsleistung an einer Meßpumpe ein eine hohe Leistung beinhaltender Ölstrom so steuern, daß damit eine Farbdosierpumpe angetrieben werden kann, deren Leistungsaufnahme das Vielfache der Leistungsaufnahme der Meßpumpe beträgt und deren Fördermenge dabei proportional zum Drehwinkel des Steuergeräts ist.

Da der Hydraulikmotor für die Farbdosierpumpe mit dem hydraulischen Steuergerät durch Hydraulikschläuche verbunden werden kann, läßt sich die Farbdosierpumpe in beliebiger räumlicher Lage relativ zur Meßpumpe anordnen, deren Lage an eine günstige Antriebsmöglichkeit von der Fahrbahn aus oder von einem anderen sich mit einer zur Fahrgeschwindigkeit proportionalen Drehzahl drehendem Teil der Straßenmarkierungsmaschine aus gebunden ist.

Vorzugsweise werden für Straßenmarkierungsmaschinen Farbdosierpumpen verwendet, die mit zwei durch Hydraulikzylinder angetriebenen oszillierenden Verdrängern ausgestattet sind, deren Druckhübe sich nicht aneinanderreihen, sondern sich aus hier nicht weiter zu erläuternden Gründen überschneiden. Derartige Farbdosierpumpen benötigen zum Betrieb ihrer Verdränger zwei gleichgroße, vom Druck weitgehend unabhängige Ölströme. Die Erzeugung dieser gleichgroßen Ölströme durch Teilung mit Hilfe von Stromteilern (Stromteilventilen und Zahnradstromteilern) aus einem einzigen Ölstrom ist nur unvollkommen und unwirtschaftlich realisierbar. Stromteiler weisen bei hinreichender Teilgenauigkeit einen nur verhältnismäßig kleinen Arbeitsbereich zwischen minimalen und maximalen Ölstrom auf, so daß der gesamte in Frage kommende Fahrgeschwindigkeitsbereich der Straßenmarkierungsmaschine überhaupt nicht abgedeckt werden kann. Ein weiterer Nachteil ist die bei Stromteilern auftretende große Wärmeerzeugung. Für diese Art von Farbdosierpumpen lassen sich die erforderlichen gleichgroßen Ölströme in idealer Weise dadurch bereitstellen, daß jeder einzelne Ölstrom durch ein eigens dafür vorgesehenes hydraulisches Steuergerät erzeugt wird, wobei die Steuergeräte vorzugsweise gemeinsam angetrieben werden.

Das Antriebsdrehmoment für die Meßpumpen ist so gering, daß sich für deren Antrieb auch elektrische Schrittmotoren mit einem bei der begrenzten Stromversorgung an mobilen Arbeitsmaschinen geringen Drehmoment eignen. Elektrische Schrittmotore lassen sich im Vergleich zu anderen elektrischen Antrieben besonders vorteilhaft in ihrer Drehzahl exakt proportional zur Fahrgeschwindigkeit steuern und das auch bei einer Fahrgeschwindigkeit und damit bei einer Schrittmotordrehzahl nahe Null. Die Drehzahl wird durch die Frequenz elektrischer Impulse gesteuert, wobei pro Impuls eine Drehung um einen definierten Winkel ausgeführt wird. Die zum Betreiben des Schrittmotors erforderliche Frequenz elektrischer Impulse muß proportional zu einem von der Straßenmarkierungsmaschine in Form einer Spannung, einer Stromstärke oder einer Impulsfrequenz bereitgestellten Geschwindigkeitssignal sein, das wiederum proportional zur Fahrgeschwindigkeit ist. Auf elektronischem Wege läßt sich in einfacher Weise der Übersetzungsfaktor zwischem dem Geschwindigkeitssignal und der zum Betreiben des Schrittmotors erzeugten Impulsfrequenz entsprechend der gewünschten Übersetzung zwischen Längeneinheit des Fahrwegs und der zuzuordnenden Fördermenge der Farbdosierpumpe verändern. Der der Farbmenge pro Längeneinheit des Fahrwegs entsprechende Übersetzungsfaktor ist dem elektrischen Steuergerät für den Schrittmotor vom Bedienungspersonal über eine Tastatur oder über Drehschalter einzugeben. Die Farbmenge pro Längeneinheit des Fahrwegs ist abhängig von Breite und Dicke der zu erzeugenden Markierungslinie.

Anhand einer Zeichnung soll der Aufbau der erfindungsgemäßen Farbdosierpumpe näher erläutert werden.
- Fig 1: zeigt den prinzipiellen Aufbau, bei der der Antrieb der Meßpumpe mechanisch durch ein auf der Fahrbahn abrollendes Bodenrad erfolgt.
- Fig. 1a: zeigt das hydraulische Steuergerät aus Fig. 1 mit dem Verteilerventil in derjenigen Stellung, die es bei der Drehung der Antriebswelle in Pfeilrichtung einnimmt.
- Fig. 2: zeigt den prinzipiellen Aufbau einer Ausgestaltung, bei der der Antrieb der Meßpumpe durch einen elektrischen Schrittmotor erfolgt.

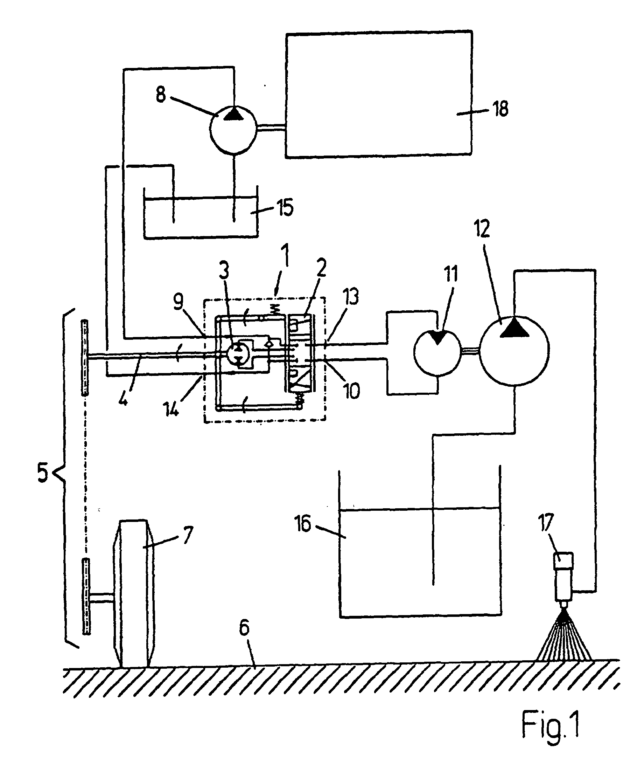

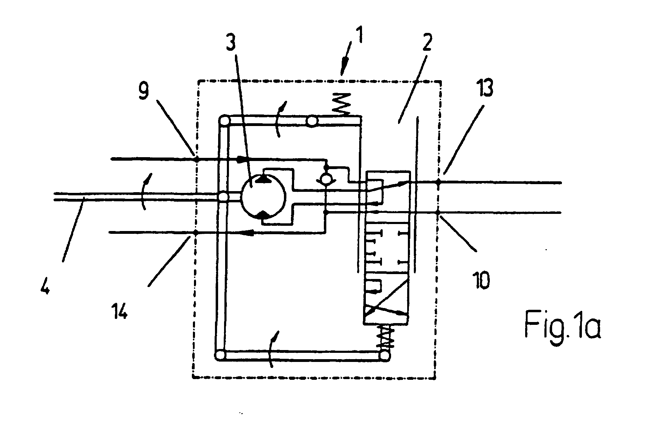

Bei dem in Fig. 1 beispielhaft dargestellten Steuergerät 1 handelt es sich um eine Kombination aus einem Verteilerventil 2 und einer als Verdrängerpumpe ausgebildeten Meßpumpe 3, wie sie in sogenannten Orbitrol-Lenkeinheiten (ventilen) vorliegen. Verteilerventil 2 und Meßpumpe 3 lassen sich beide von einer Antriebswelle 4 in Drehung versetzen. Die Antriebswelle 4 steht über mechanische Getriebe 5 mit einem auf der Fahrbahn 6 abrollenden Rad 7 in Verbindung. Bei Drehung der Antriebswelle 4 in Pfeilrichtung nimmt das Verteilerventil 2 die in Fig. 1a dargestellte Stellung ein, in der von einer Versorgungspumpe 8 bereitgestelltes, am Anschluß 9 anstehendes Drucköl über die Meßpumpe 3 weitergeleitet wird zu einem Anschluß 13 und von dort zu einem Hydraulikmotor 11, der eine Farbdosierpumpe 12 antreibt. Die weitergeleitete Druckölmenge entspricht dabei der von der Meßpumpe 3 vollzogenen Gesamtverdrängung, d. h. sie ist proportional zu der Anzahl der Umdrehungen. Über Anschlüsse 10 und 14 fließt das Drucköl zu einem Hydrauliktank 15. Die Farbdosierpumpe 12 saugt aus einem Vorratsbehälter 16 Farbe an und fördert diese zu einem Auftragungsorgan 17, das hier beispielhaft als Spritzpistole dargestellt ist. Die Versorgungspumpe 8 wird von einem Antriebsaggregat 18 angetrieben.

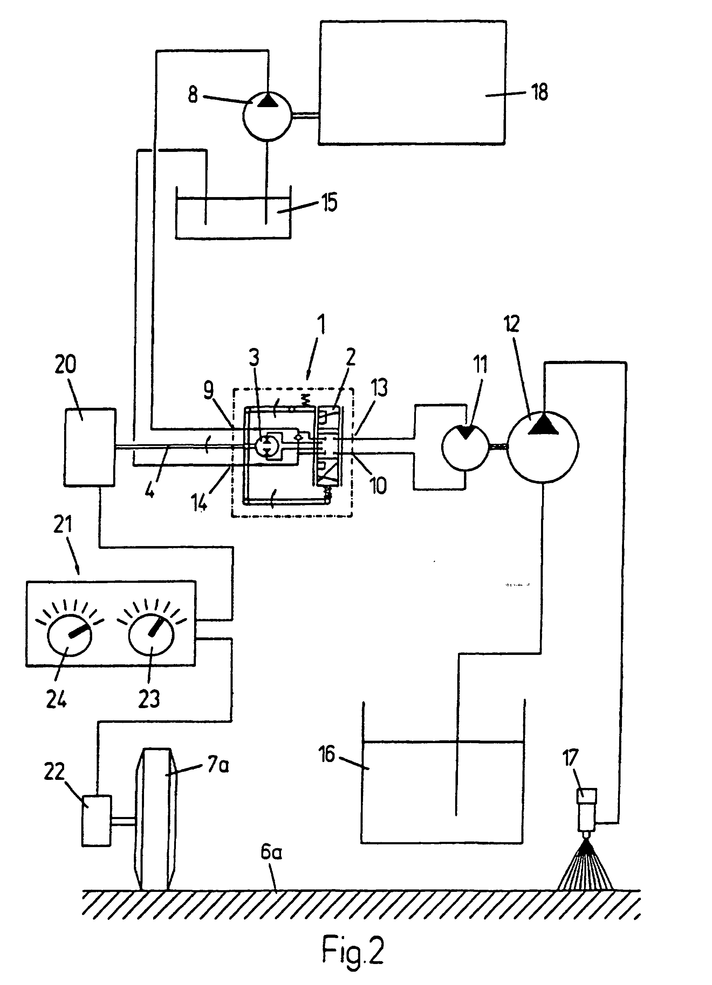

Fig. 2 zeigt einen Antrieb mit dem gleichen hydraulischen Aufbau wie in Fig. 1. Der Antrieb des Steuergerätes 1 erfolgt durch einen elektrischen Schrittmotor 20, der seine zum Betreiben notwendigen Impulse von einem elektrischen Steuergerät 21 erhält. Dem Steuergerät 21 werden Impulse eines von einem auf einer Fahrbahn 6a abrollenden Rades 7a angetriebenen Impulsgenerators 22 zugeführt, wobei die Frequenz der Impulse proportional zur Fahrgeschwindigkeit der Straßenmarkierungsmaschine ist.

Zur Änderung des Proportionalitätsfaktors zwischen der Frequenz der vom Impulsgenerator 22 erzeugten Impulse und der Frequenz der zu Betreiben des Schrittmotors notwendigen Impulse weist das elektrische Steuergerät 21 Eingabemöglichkeiten für Breite und Dicke der Markierlinie auf, in Fig. 2 beispielhaft dargestellt durch Drehknöpfe 23 und 24. Mit den üblichen Mitteln der Elektronik wird aus beiden Eingaben und anderen fixen von der Anlage abhängigen Parametern der Proportionalitätsfaktor ermittelt.

## Patentansprüche

1. Farbdosierpumpenantrieb für eine Straßenmarkierungsmaschine,
- wobei der Farbdosierpumpenantrieb eine Farbdosierpumpe (12), einen diese antreibenden Hydraulikmotor (11) und eine Versorgungspumpe (8), mit der ein Druckölstrom erzeugbar ist, aufweist,
- wobei der Druckölstrom über eine Steuereinrichtung einstellbar und an den die Farbdosierpumpe (12) antreibenden Hydraulikmotor (11) weiterleitbar ist,
- wobei die Steuereinrichtung mindestens ein proportional zur Fahrgeschwindigkeit der Straßenmarkierungsmaschine angetriebenes hydraulisches Steuergerät (1) mit einer Antriebswelle (4) ist,
- wobei das hydraulische Steuergerät (1) ein mit der Antriebswelle (4) oder mit einer mit der Antriebswelle (4) gekoppelten Welle angetriebenes Verteilerventil (2) und eine mit der gleichen Welle gekoppelte Meßpumpe (3) aufweist und
- wobei bei der Drehung der Antriebswelle (4) Drucköl von der Versorgungspumpe (8) durch das Verteilerventil (2) und die Meßpumpe (3) mit einer zur Zahl der Meßpumpenumdrehungen proportionalen Menge zu dem die Farbdosierpumpe (12) antreibenden Hydraulikmotor (11) fließt.

2. Farbdosierpumpenantrieb nach Anspruch 1, **dadurch gekennzeichnet, daß** er zwei um 180° phasenversetzt wirkende Linear-Hydraulikmotore und für jeden dieser Linear-Hydraulikmotore ein hydraulisches Steuergerät aufweist.

3. Farbdosierpumpenantrieb nach Anspruch 1 oder 2, **dadurch gekennzeichnet, daß** die Antriebswelle (4) über ein mechanisches Getriebe (5) mit einem auf einer mit einer Markierlinie zu versehenden Fahrbahn (6) abrollenden Rad (7) in Verbindung steht.

4. Farbdosierpumpenantrieb nach Anspruch 1 oder 2, **dadurch gekennzeichnet, daß** der Antrieb für das hydraulische Steuergerät (1) einen elektrischen Schrittmotor aufweist und daß die Frequenz der zu dessen Betrieb erforderlichen Impulse proportional zur Fahrgeschwindigkeit der Straßenmarkierungsmaschine ist.

5. Farbdosierpumpenantrieb nach Anspruch 4, **dadurch gekennzeichnet, daß** der Antrieb für das hydraulische Steuergerät (1) mit einer Eingabeeinrichtung für die Breite und für die Dicke der zu erzeugenden Markierlinie ausgestattet ist.

## Claims

1. Paint metering pump drive for a road marking machine,
- wherein the paint metering pump drive comprises a paint metering pump (12), a hydraulic motor (11) driving said paint metering pump, and a supply pump (8) that can be used to generate a pressure oil flow;
- wherein the pressure oil flow can, via a controlling device, be adjusted and transferred to the hydraulic motor (11) that drives the paint metering pump (12);
- wherein the controlling device is at least one hydraulic control unit (1) that comprises a drive shaft (4) and is driven proportionally to the driving speed of the road marking machine;
- wherein the hydraulic control unit (1) comprises a distributor valve (2), that is driven either by the drive shaft (4) or by a shaft coupled to the drive shaft (4), and a metering pump (3) coupled to the same shaft; and
- wherein, on rotation of the drive shaft (4), pressure oil flows from the supply pump (8) through the distributor valve (2) and the metering pump (3) to the hydraulic motor (11) that drives the paint metering pump (12), with the volume of the pressure oil being proportional to the number of revolutions of the metering pump.

2. Paint metering pump drive according to claim 1, **characterized in that** it comprises two linear hydraulic motors working with a phase shift of 180 degrees, and a hydraulic control unit for each of these linear hydraulic motors.

3. Paint metering pump drive according to claim 1 or 2, **characterized in that** the drive shaft (4) is in communication with a wheel (7) via a mechanical gearing (5), with said wheel rolling on a road (6) that is to be provided with a marker line.

4. Paint metering pump drive according to claim 1 or 2, **characterized in that** the drive for the hydraulic control unit (1) comprises an electric stepper motor and that the frequency of the pulses required for operating said stepper motor is proportional to the driving speed of the road marking machine.

5. Paint metering pump drive according to claim 4, **characterized in that** the drive for the hydraulic control unit (1) is equipped with a device for inputting the width and the thickness of the marker line to be generated.

## Revendications

1. Dispositif d'entraînement d'une pompe doseuse pour une machine de marquage routier,
- dans lequel le dispositif d'entraînement de pompe doseuse inclut une pompe doseuse (12), un moteur hydraulique (11) qui l'entraîne et une pompe d'alimentation (8) qui peut engendrer un flux d'huile sous pression,
- dans lequel le flux d'huile sous pression est réglable au moyen d'un appareil de commande et peut être transmis au moteur hydraulique (11) qui entraîne la pompe doseuse (12),
- dans lequel l'appareil de commande est au moins un dispositif de commande hydraulique (1) qui est entraîné proportionnellement à la vitesse de déplacement de la machine de marquage routier et comporte un arbre d'entraînement (4),
- dans lequel le dispositif de commande hydraulique (1) comprend une vanne de répartition (2), entraînée par l'arbre d'entraînement (4) ou par un arbre accouplé à l'arbre d'entraînement (4), et une pompe de mesure (3) accouplée au même arbre, et
- dans lequel de l'huile sous pression s'écoule de la pompe d'alimentation (8), lors de la rotation de l'arbre d'entraînement (4), à travers la vanne de répartition (2) et la pompe de mesure (3) vers le moteur hydraulique (11) qui entraîne la pompe doseuse (12) à un débit proportionnel au nombre des rotations de la pompe de mesure.

2. Dispositif d'entraînement de pompe doseuse selon la revendication 1, **caractérisé en ce qu'**il comprend deux moteurs hydrauliques linéaires à effets déphasés de 180° et un dispositif de commande hydraulique pour chacun de ces moteurs hydrauliques linéaires.

3. Dispositif d'entraînement de pompe doseuse selon la revendication 1 ou 2, **caractérisé en ce que** l'arbre d'entraînement (4) est en liaison, par l'intermédiaire d'une boîte de vitesse mécanique (5), avec une roue (7) qui roule sur une chaussée (6) où doit être appliquée une ligne de marquage.

4. Dispositif d'entraînement de pompe doseuse selon la revendication 1 ou 2, **caractérisé en ce que** l'entraînement du dispositif de commande hydraulique (1) comprend un moteur électrique pas-à-pas et **en ce que** la fréquence des impulsions nécessaires pour le fonctionnement de ce dernier est proportionnelle à la vitesse de déplacement de la machine de marquage routier.

5. Dispositif d'entraînement de pompe doseuse selon la revendication 4, **caractérisé en ce que** l'entraînement du dispositif de commande hydraulique (1) est équipé d'un dispositif d'entrée de données pour introduire la largeur et l'épaisseur de la ligne de marquage à engendrer.
